# FASCICULE DE BREVET EUROPEEN

(11) **EP 1 942 825 B1**
(45) Date de publication et mention de la délivrance du brevet: **04.03.2009**
(21) Numéro de dépôt: 06831032.5
(22) Date de dépôt: 27.10.2006
(51) Int. Cl.: A61C 5/02, A61C 5/04

(54) **DISPOSITIF DE PREPARATION ET D'OBTURATION DE LA CAVITE ENDODONTIQUE D'UNE DENT**
VORRICHTUNG ZUR VORBEREITUNG UND FÜLLUNG EINER ENDODONTISCHEN ZAHNHÖHLE
DEVICE FOR PREPARING AND FILLING A TOOTH ENDODONTIC CAVITY

(30) Priorité: 28.10.2005 FR 0511031
(43) Date de publication de la demande: 16.07.2008
(73) Titulaire: MICRO MEGA INTERNATIONAL MANUFACTURES, 25000 Besançon (FR)
(72) Inventeur: PAYEN DE LA GARANDERIE, Emmanuel, 92700 Colombes (FR)
(74) Mandataire: Poupon, Michel
(86) Numéro de dépôt international: PCT/FR2006/002419
(87) Numéro de publication internationale: WO 2007/048938

(56) Documents cités:
- FR-A- 2 735 012
- US-A- 4 992 048

## Description

La présente invention concerne un dispositif de préparation et d'obturation de la cavité endodontique d'une dent, comprenant au moins un instrument travaillant endocanalaire, pouvant être solidarisé à une tête d'entraînement.

L'innovation intervient dans, des cas cliniques différents, qui conduisent à l'ouverture, à l'exploration et au traitement de cet espace qui contenait le résidu embryologique constitutif de la dent : le nerf. Appelé dévitalisation, ce geste revêt un aspect chirurgical plus marqué lorsqu'il s'agit d'une nécrose, on parle alors de parage de la plaie. Ces travaux et l'obturation de l'espace créé aux dépens de la dent, s'appellent l'endodontie. La présente invention s'attache à réaliser ce traitement avec plus d'efficacité, plus d'aisance, et moins de moyens mis en oeuvre. L'état actuel de l'art a été identifié et ses limites ont été rencontrées.

La présente invention çoncerne donc bien un dispositif de traitement de la totalité de la cavité endodontique d'une dent comprenant au moins un instrument érodant endocanalaire; pouvant être solidarisé à une tête d'entraînement mue par tous moyens connus.

Il va maintenant être procédé à la mise en évidence des insuffisances de l'art antérieur dans le domaine de l'endodontie ayant conduit à la mise au point de l'invention.

Le manque de fiabilité des traitements anciens ou récents, ainsi que le stress et la fatigue qui accompagnent ce traitement exigeant, montrent la nécessité d'augmenter le pourcentage de succès et d'améliorer les conditions de sa réussite.

« Arracher » la pulpe est un geste incomplet pour réussir ce traitement. Il nécessite une ampliation canalaire ce que réalise avec succès l'innovation. Car « mettre en forme » un canal représente aujourd'hui le résultat de l'action des instruments actuellement connus : un alésage mécanique avec des instruments de section circulaire aux dépens d'une cavité de forme quelconque, qui n'est donc que partiellement instrumentée, ou alors fragilisée, pouvant présenter un déplacement canalaire ou apical relatif. Les instruments de section excentrique induisent une sensation de serrage et ne libèrent pas la sensibilité du geste du praticien, leur utilisation réalise un déplacement canalaire relatif difficile à contrôler. Enfin; les instruments de mise en forme partielle et notamment ceux proposés par le brevet n°FR 2 735 012 A qui imposent un volume de révolution à une portion canalaire, créent des butées au niveau de leur extrémité ; même plus longs, ils réalisent une mobilisation de l'organe dentaire, très peu confortable pour le patient, et parfois, lorsque l'axe de rotation s'éloigne de l'axe du canal a traiter, il réalisent des à coups et des cognements, leur nécessaire rigidité à des fins d'efficacité est contraire à une simple ampliation ou alésage homothétique conservant la solidité de l'organe dentaire,ce que réalise avantageusement la présente innovation, contrairement aux autres dispositifs connus. Ils ne réalisent pas, non plus, en même temps, l'ablation totale des tissus présents dans la cavité.

Plusieurs phases se superposent et s'entrecroisent, dans les protocoles connus, on identifie: : **Ouverture** de la chambre pulpaire ou du canal : c'est la cavité d'accès ; **le cathétérisme** du ou des canaux : repérage en longueur et en forme du canal principal de la racine, **l'extirpation** du contenu, le **parage des parois de l'endodonte,** l'irrigation par soluté antiseptique, **l'actuelle mise en forme** canalaire par alésage : utilisation d'alésoirs partiels ou sur toute la longueur, de diamètres croissants, manuels ou utilisant la rotation continue pour la partie supérieure du canal plus exceptionnellement pour la partie apicale. Enfin l'obturation après séchage, c'est le scellement tridimensionnel de la cavité préparée.

La présente invention a pour but de réduire le nombre de ces phases, ainsi que le nombre d'instruments nécessaires pour les réaliser. Au contraire tous les dispositifs existants qui, inclus dans un protocole multi instrumental, réalisent une partie seulement de l'opération à réaliser, spatialement (notamment le brevet FR 2 735 012 A, pour la zone opérée), (et US 4 992 048 A pour le mouvement décrit), et dans le protocole (mêmes brevets).

A cet effet, elle concerne un « Dispositif de préparation et d'obturation de la totalité de la cavité endodontique d'une dent », à la différence du brevet FR 2 735 012 A qui ne traite que les 2/3 coronaires du canal, « comprenant au moins un instrument travaillant endocanalaire (1), solidarisé d'une tête d'entraînement motrice (10) mue par tous moyens connus, caractérisé en ce que l'instrument endocanalaire(1) est constitué par une base(2) susceptible d'être entraînée en mouvement, », au contraire de la partie instrumentale relevée dans le brevet n°US 4 992 048 A, « par une tête d'entraînement(10) autour d'un axe de référence(A), base(2) à partir de laquelle s'étend librement une partie travaillante (3) filiforme, élastiquement déformable et souple, dont l'axe est décalé parallèlement par rapport à l'axe principal de référence(A), mais centré autour de celui-ci pour engendrer un volume de révolution quelconque théorique(VI),avantageusement cylindrique, » au contraire du brevet FR 2 735 012 qui délivre un mouvement conique, « lorsqu'il tourne sans contrainte, et pour s'auto adapter à une cavité de volume quelconque (V2), » à là différence du dispositif protégé par le brevet n° FR 2 735 012 A qui impose sa forme de rotation, « à travailler lorsqu'il est contraint par cette dernière, de section plus étroite que le volume de révolution théorique (V1) de l'instrument (1), et que par ailleurs l'extrémité libre de ladite partie travaillante souple est maintenue spatialement sur un zone d'appui (P) , qui peut être la zone de gainage apical, situé au fond de la cavité à travailler, de manière à obtenir un instrument multifonctions susceptible d'effectuer tout à la fois, à savoir : le cathétérisme, l'alésage apical et coronaire, ainsi que l'aspiration chirurgicale des résidus du ponçage et leur éjection vers la sortie canalaire par simple déplacement angulaire de l'axe de rotation de la base de l'instrument, dans un sens ou dans un autre, et grâce aux qualités mécaniques, par rapport à la zone d'appui P. » Ces multi fonctions isolant la présente innovation des deux brevets précités et de l'art antérieur connu.

L'invention propose ainsi de réaliser un volume virtuel par l'axe de la partie travaillante décentré par rapport à l'axe de rotation du guide ou par le guide lui-même décentré par rapport à l'axe du rotor. Car, l'instrument endocanalaire peut être constitué par une base dont l'axe correspond à l'axe de rotation de la tête d'entraînement c'est la partie filiforme qui est décentrée, mais, aussi l'instrument endocanalaire peut être constituée d'une base dont l'axe de rotation est décentré de l'axe de rotation de la tête d'entraînement, ces moyens répondant à notre description initiale.

Ainsi, est créée une solution simple de pulpectomie et d'érosion de la surface canalaire mettant en jeu le fait mécanique de la coupe. Cette phase est donc faite par un instrument qui décrit un volume de révolution. L'instrument décrit une trajectoire qui utilise la surface du volume virtuel, et son élasticité force toute contrainte rencontrée dans son trajet vers le volume de révolution initial. La dynamique du mouvement crée une résilience de forme par la restitution du volume virtuel grâce à l'élasticité du matériau de l'instrument. Cela autorise un travail rendu possible par des reliefs de la surface de l'instrument, qui a une fonction de coupe tangentielle. Plusieurs décentrements possibles sont réalisables tant dans la conception d'une instrumentation canalaire que d'une tête instrumentale. Ainsi, en fonction du cas clinique un choix ou un réglage d'instrument s'offre au clinicien.

Des zones lisses ou d'absence de reliefs travaillants évitent l'opposition de deux zones ou points de blocages, diminuant le risque de fractures. Elles sont disposées en opposition diamétrale et/ou disposées par plages longitudinales permettant de travailler de manière sectorielle sur des doubles courbures par exemple.

Une succession de repères permettant de déterminer dans un premier temps la longueur de travail, puis dans un deuxième temps, de la respecter pendant le travail,celui-ci étant effectué seulement selon un mouvement de révolution essentiellement. Cela dans un plan contrôlé en permanence puisque le mouvement est peu longitudinal. Ce contrôle est nécessaire à la différence des dispositifs travaillants (notamment le brevet FR 2 735 012) sur certaine portion du canal qui n'ont pas l'utilité indispensable de ces repères. Un point de faiblesse réalise une zone préférentielle de fracture à distance des zones intracanalaires, la préhension du morceau fracturé est alors aisée. Notons qu'un instrument de cathétérisme est moins fortement gainé qu'un instrument de mise en forme et donc plus facilement extractible.
Grâce à ce mouvement d'exploration de la surface canalaire, la partie travaillante de l'instrument en portant un ciment ou un produit liquide ou pâteux permettant l'enduction de la totalité de la surfacé du canal à des fins d'enduction de ses parois et/ou d'obturation de celui-ci.

Un tel dispositif permet d'éliminer les difficultés et insuffisances de l'art antérieur en y apportant des solutions.

### - A PROPOS DE L'ACCESSIBILITE:

Ici se trouve une des indications les plus évidentes de l'utilisation d'un porte instrument contre angle, qui permet le maintien sécurisé avec une forte angulation de l'instrument pour accéder à ce canal. Seules restent la précision dans le repérage et l'intromission dans l'entrée du canal. C'est ici que l'absence de répétition de ce geste prend toute sa nécessité. Dès que le canal est trouvé et l'instrument positionné, il serait intéressant que l'instrument ne soit plus retiré, c'est ce que propose le nouveau dispositif. Par opposition avec les instruments s'incluant dans un protocole ou réalisant une partie seulement du travail sur le canal (précités dans les brevets retenus par l'examinateur de l'INPI et classés A) Même, un cathétérisme réalisé une fois par un instrument d'un diamètre de 10/100^{ème} permet de connaître le canal en dimension et en direction. Ainsi, reprendre ce geste une fois qu'il a été réalisé manuellement par un instrument de même dimension est relativement aisé si le retour n'est effectué qu'une suele fois. Cela même si la répétition du geste complexe est ce que le concept tente d'éliminer.

### - A PROPOS DE LA VISIBILITE:

C'est lors du repérage des entrées canalaires, que se stigmatisent donc ses difficultés, ainsi la diminution des répétitions de ce geste facilitera grandement la vitesse d'exécution de l'acte thérapeutique, et la fatigue accumulée sera moins grande. La mise en place de repères externes une justification possible dans l'avenir.

### - A PROPOS DE LA GESTUELLE :

Majorer l'utilisation de la mécanisation est une réponse à la fatigue corporelle du praticien il est en revanche nécessaire qu'elle laisse la place à la possibilité d'utiliser ses doigts. Si ce nouveau dispositif permet les deux, il ne permet pas une utilisation digitale aisée pour élargir le canal, puisque la mécanisation l'avantage. Cela nécessite en plus l'étude ergonomique du mandrin dont la préhension doit être optimisée.

### - A PROPOS DES AVANTAGES DE LA DIMINUTION DES MOUVEMENTS LONGITUDINAUX :

Le type de mouvement en va et vient impose le contrôle permanent de la longueur de l'instrument.

Ce type de mouvement repousse des débris septiques au-delà de l'apex, comme les instruments partiels, et l'extirpation du contenu canalaire oblige des mouvements fréquents de va et vient réalisant des bouchons de tissus pulpaires ou dentinaires. Il est à noter qu'un instrument rotatif partiellement engagé dans le canal, comme le propose le brevet n° FR A 2 735 012, réalise une possibilité d'accumulation de débris en dessous de son extrémité. Ainsi, La perméabilisation permanente par le maintien en place d'un instrument fin évite l'ensemble de ces problèmes. L'absence de mouvements de va et vient répétés limite les traumatismes du périapex, et l'encombrement de cette zone d'une manière certaine.

Les contraintes instrumentales en torsion entraînent des ruptures, le mouvement n'engendre que peu ou pas de blocages, de plus les zones lisses limitent les blocages en opposition.

### - A PROPOS DES AVANTAGES D'UN MOUVEMENT LIBRE :

L'absence de contraintes de serrage libère la sensibilité tactile du praticien, cela redonne ses lettres de noblesses à la dextérité et à l'expérience. Cela ne complexifie en aucune manière son apprentissage : les contrôles étant les mêmes que ceux d'une préparation coronaire périphérique selon les trois axes (Prothèse conjoinre : bridge et couronne). Mais, une origine très excentrée de la partie travaillante ou oblique assez fortement provoque une contrainte en retour dans la main du praticien, au contraire d'un décentrement réalisé par un instrument élastiquement déformable qui n'impose pas, en première intention, son volume de révolution. L'invention propose un travail d'alésage du canal, par simple ampliation, selon un mouvement essentiel d'exploration des parois par l'instrument, il en résulte que les contraintes en opposition au mouvement sont plus limitées puisque dans un seul et unique sens. La main est libérée progressivement du gainage réalisé par le canal.

### - A PROPOS DE LA LONGUEUR DE TRAVAIL:

L'une des étapes majeures du protocole endodontique est sa détermination. Pour certains praticiens, les localisateurs d'apex ont facilité leur tâche. La radio, instrument en place donnant la plus grande sécurité. D'autres le ressenti tactile est leur meilleure mesure. L'invention n'empêche aucune de ces méthodes. Par ailleurs la succession instrumentale est source d'erreurs puisque les stops ne sont pas toujours bien fixes ou bien réglés. Cette longueur une fois pour toute déterminée, l'instrument mis en place et ne réalisant pas de mouvements de va et vient, n'a pas besoin d'être directement contrôlée si le mouvement n'est que dans un plan transversal par rapport à l'axe général de la dent. Porteur de repères colorés sur la partie jouxtant le manche, selon une autre caractéristique de l'invention, ou sur un accessoire à distance.
Ces avantages éloignent définitivement l'art actuel connu, qui s'inscrit dans des protocoles par étapes, où les dispositifs travaillent sur une partie de la longueur du canal

### - A PROPOS DE LA FORME DES INSTRUMENTS :

Les instruments de section ronde réalisent une mise en forme canalaire cylindro-conique, pouvant affaiblir lorsque l'on sur-alèse certaines parois radiculaires, ou même le plancher, car ils imposent une forme d'alésage, réalisant systématiquement un déplacement canalaire relatif. Les instruments qui imposent un volume de révolution sans être élastiquement déformables imposent la même mise en forme. L'invention semble respecter l'anatomie initiale lorsqu'elle est utilisée selon les règles proposées, mais permet sûrement, en déplaçant la pression sur une paroi, de réaliser une rectification de trajectoire à des fins d'accessibilité. La réalisation de surfaces érodantes ou travaillantes sectorielles permet dans les cas les plus difficiles due gommer des courbures accentuées sans réaliser de butées ou de perte de lumière canalaire par bourrage ce qui semble être le cas lors d'instrumentation partielle du canal (brevet FR 2 735 012 A). Selon une des autres caractéristiques de l'innovation. Un choix d'instruments sera proposé, dans tous les cas l'extrémité ne doit pas piquer ni être travaillante dans ces cas précis, car sur une partie seule du canal ce type de mouvement de rotation avec un rayon supérieur au rayon initial du canal l'extrémité de l'instrument va réaliser une encoche, rendant très difficile la perméabilisation ultériéure. ( brevet FR 2 735 012 A) Il en est de même pour les instruments délivrant une onde sonore ou ultra sonore. ( Brevet US 4 992 048 A) Selon l'innovation, sans aucun doute, un déplacement apparent du canal est réalisée, mais il reste très faible.

Quelque soit la section des instruments connus et leurs mouvements, ils peuvent affaiblir certaines parois radiculaires, ou même le plancher. Dans tous les cas, ils imposent une forme d'alésage, sans que le choix du praticien intervienne, réalisant systématiquement un déplacement canalaire relatif, et imposé à l'anatomie initiale. La forme de section ronde qui tourne sur elle-même « oublie » les diverticules que l'on voit dans les coupes transversales d'un grand nombre de canaux. Ainsi de nombreuses zones ne sont pas instrumentées. Un mouvement d'exploration tel que proposé avec une partie travaillante élastiquement déformable, intéresse toutes les parois, quelque soit leur position ou leur forme. La présente innovation use les parois de manière équivalente lorsque l'axe de rotation est maintenu coaxial avec l'axe du canal: mécaniquement et géométriquement évidente cette assertion est confirmée par les tests : 100% des parois se trouvent instrumentées. Cet évident avantage se comprend immédiatement sur un canal droit ou avec une courbure faible.

Lorsque la courbure est plus accentuée, la souplesse du métal utilisé autorise un travail sur chacune des parois, en effet, dans un premier temps l'instrument de diamètre proche de celui du canal (puisqu'il s'agit d'un instrument de cathétérisme) gainé par celles-ci réalise un travail pratiquement en rotation sur lui-même donc de manière quasi équivalente sur les parois supérieures à lui-même et inférieures à lui-même. L'invention réalise avantageusement ce travail sur les parois d'une manière quasi équivalente.

Il semble préférable de choisir une surface dont la rugosité soit efficace dans le sens transversal par rapport à l'axe du canal, et pas dans le sens longitudinal, ce qui facilite le cathétérisme et rend le ponçage efficace lorsque l'instrument est monté sur la tête rotative.

### - A PROPOS DU NOMBRE D'INSTRUMENTS :

On compte en moyenne de six à huit instruments par canal, avec toute la manutention que cela suppose. L'idéal est bien entendu de restreindre l'instrumentation tant pour l'alésage apical que coronaire, l'invention n'en propose qu'un seul; mais peut aisément s'adjoindre à n'importe quelle procédure. Cela au contraire de tous les instruments connus dans l'art actuel.

### - A PROPOS DU NOMBRE D'ETAPES DE LA PROCEDURE :

Diminuer le nombre d'étapes se fait par la diminution du nombre d'instruments, le parage canalaire par l'irrigation pourrait se faire par la mise en rotation du liquide provenant du spray. Le tourbillon démontré dans l'explicitation physique permet une remontée des boues alors chargées d'antiseptique. Ce mouvement serait majoré par l'utilisation de l'aspiration chirurgicale en face de la cavité d'accès, par une canule d'aspiration habituelle ou étroite et installée le long de l'instrumentation. Cette diminution d'étapes de procédures réalise une opposition des antériorités relevées. En plus, un protocole simplifié favorise son apprentissage.

### - A PROPOS DU NOMBRE D'ETAPES DE DESINFECTION DES INSTRUMENTS : .

Moins d'instruments supposent de moindres manipulations pour la décontamination et la stérilisation du matériel. Cette diminution du coût autoriserait l'arrivée sur le marché d'instrument à usage unique. On a donc,plus de sécurité pour un coût diminué.

### - A PROPOS DU PARAGE CANALAIRE :

Parer une plaie signifie l'excision des tissus altérés, sa désinfection par ce retrait et par l'application de solution antiseptique. L'utilisation d'un spray chargé d'hypochlorite de sodium pourrait le permettre, à la condition que les projections soient maîtrisées. D'autres solutions antiseptiques, permettant une utilisation sous forme de spray, sont en cours d'études sur les flores canalaires rencontrées. Mais, l'utilisation du dispositif selon l'invention n'empêche pas l'utilisation de techniques ou d'instruments connus. Celle ci accroît d'ailleurs la qualité du parage par le travail sur la totalité de la surface contrairement aux instruments qui réalisent une activité sectorielle.

### - A PROPOS DU PROBLEME DE STOCKAGE DES INSTRUMENTS:

Répondre à cette problématique se fait par une procédure moins coûteuse en instruments et le nouveau dispositif présenté y répond. L'usage unique étant d'autant plus pertinent que les manipulations sont moins importantes, alors elles sont moins coûteuses, tant en main d'oeuvre qu'en occupation spatiale et donc temporelle.

### - A PROPOS DE L'AISANCE ET DE LA QUALITE D'OBTURATION:

Le scellement d'une obturation canalaire est d'autant meilleur que le canal est sec et vide de son contenu. L'efficacité du concept semble être largement supérieure à toutes les techniques actuellement existantes, en effet aucun diverticule ne subsiste après passage de l'innovation. De plus, le ponçage des parois sous irrigation semblerait ouvrir les canaux accessoires avec plus d'efficacité : un scellement tridimensionnel de l'espacé endodontique se ferait grâce à cette préparation canalaire avec une plus grande fiabilité. L'utilisation de l'innovation pour l'enduction de la paroi et aisée selon une autre caractéristique de l'innovation.
En conclusion :

L'innovation est représentée par un dispositif qui réalise un volume de révolution. la surface décrite est la face axiale d'un volume engendré par une courbe, appelé directrice, tournant autour d'une droite fixe appelé axe de révolution.

En effet, il décrit une surface refermée sur elle-même qui est une des faces axiales du volume ou sa surface complète quand il y a fermeture ou réduction de la surface inférieure. La direction générale est sur un instrument neuf la même, le volume est parfaitement déterminé par cette direction, et par le ou les rayons de rotation de l'instrument par rapport à l'axe de rotation ou aux centres instantanés de rotation, si ce mouvement est elliptique. Lorsque l'extrémité de la partie travaillante est maintenue spatialement par un point ou par une zone de moindre diamètre, le mouvement est différent d'un cône au sens strict par le mouvement de la zone apicale, non réduite à un point.

Ainsi, l'introduction de l'instrument dans un volume de petit diamètre avant mise en rotation donne, lors de la mise en rotation, des volumes de révolution dynamiques variables : cylindrique, conique, hyperbolloïdique, ellipsoïdique, parabolloïdique, catenoïdique, donc, parfois, plus ou moins conique, au moins au début lorsque la zone apicale est plus ou moins ponctiforme. Son auto adaptabilité réalise donc par les contraintes et les libérations successives, bien d'autres volumes dynamiques qui se succèdent en restituant progressivement le volume de révolution de l'instrument non soumis à une contrainte, ou alors, proposé par la tête instrumentale. L'effet sur les parois du canal est en relation avec son état de surface, qui peut alors avoir un effet de réduction de son épaisseur, l'instrument aura alors un effet d'ampliation et du fait de l'élasticité du matériau de l'instrument, le diamètre du canal sera donc agrandi. Dans un volume complexe les parois semblent toutes instrumentées, ce qui est un avantage et une avancée indéniable. Ainsi montrée l'invention permet l'alésage des canaux dentaires de volume interne complexe.

Cela permet avec un instrument de cathétérisme, ou un instrument fin et souple permettant la reconnaissance canalaire complète, de réaliser l'alésage ou un agrandissement du volume canalaire à des fins de dépulpation et/ou de parage du canal.

Car avantageusement la présente innovation réalise l'extirpation du contenu canalaire par son seul mouvement et l'action des parties travaillantes, même si cela peut être avantageusement augmenté par un champ opératoire comprenant l'aspiration chirurgicale ou par l'aspiration chirurgicale elle-même positionnée auprès de l'acte opératoire lui-même. En effet, dans tous les cas des canaux radiculaires, le mouvement obtenu, par la contrainte de la forme travaillée, réalise plus ou moins un tronc de cône tout le long de l'espace endodontique. Le long de la zone de plus grand diamètre, la vitesse linéaire instantanée de rotation est la plus grande : en effet, un instrument érodant mis en rotation par un moteur à une vitesse constante délivre une vitesse constante à tous les points de la surface de l'instrument travaillant. Celui-ci inséré dans un volume plus ou moins conique va voir son mouvement contraint plus par son extrémité distale que par sa partie proximale. Cette zone réalisant un chemin plus long que l'autre à la même vitesse va donc relativement plus vite : une attraction du contenu vers la zone de plus grand diamètre est crée par la zone d'accélération la plus importante. Un tourbillon est réalisé et la force d'aspiration naturellement constituée, se fait vers le diamètre de plus grand contour, c'est un effet venturi à petite échelle, il s'agit du modèle biophysique de la tornade. Ainsi les résidus du ponçage sont entraînés vers la sortie canalaire. Ce qui est visible sur les tests effectuées : les débris ne sont pas propulsés vers la sortie apicale mais vers la sortie canalaire.

Ainsi le concept et l'instrument sont parfaitement adaptés à ce que l'on attend de ce geste : retrait du tissus pulpaire ou du contenu nécrosé du canal et de sa partie attenante dentinaire, parage de la quasi ou de la totalité de la plaie crée. L'on peut d'ailleurs s'attendre à ce que les filets pulpaires soient arrachés des canaux secondaires ou accessoires, réalisant une extirpation d'un réseau pulpaire arachnéen.

Il s'agit donc bien d'un instrument de cathétérisme dont toute ou partie de la périphérie est travaillante, réalisant une ou plusieurs surfaces d'érosion par frottement ; les reliefs travaillants étant disposés d'une manière uniforme ou parcellaire, l'axe de cette partie filiforme étant dans le même plan qu'une génératrice d'un mandrin d'instrument à contre angle pourvu d'une queue d'aronde à des fins de blocage ' dans le sens de son axe. L'extrémité mousse peut ne pas comporter d'abrasif, l'instrument est cylindrique ou cylindro-conique de faible diamètre apical. Le mandrin peut être recouvert d'un manche manuel désinsérable pour autoriser le branchement de la tête rotative, ou présenter deux méplats opposés facilitant sa prise sans empêcher sa fonction initiale.

Il s'agit donc également d'un instrument d'alésage dont la rotation décrit à vide, lorsqu'il n'est pas contraint, un volume de révolution, qui érode les parois du canal par ses reliefs, son parcours, sa vitesse et l'élasticité du matériau utilisé. Le mouvement dans un canal réalise, du fait du serrage de son extrémité, un volume de révolution dont la dynamique tend vers un cylindre. La hauteur dé la partie la plus large varie donc pour tendre vers la longueur de travail qui correspond à la longueur de la partie de l'instrument intracanalaire.

### Description

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels.:
La figure 1 représente un instrument endocanalaire selon un exemple de réalisation de l'invention.
La figure 2 représente un volume de révolution de l'instrument selon la figure 1, lorsqu'il n'est pas contraint.
La figure 3 représente un volume de révolution de l'instrument selon la figure 1, lorsqu'il est contraint.
La figure 4 représente la zone de présence de l'instrument lorsqu'il est contraint par un volume quelconque.
La figure 5 représente le rapport de travail entre la partie haute et la partie basse de l'extrémité canalaire.
La figure 6 représente l'évaluation du déplacement virtuel du canal du fait de la rigidité instrumentale et de l'axe de rotation à distance de l'axe de la partie travaillante.
La figure 7 représente le déplacement canalaire contrôlé.
La figure 8 représente les variations des effets du rayon et de l'exploitation à la limite du rayon.
La figure 9 représente le phénomène de cognement dans des positions limites.

Le dispositif endocanalaire est constitué d' au moins un instrument travaillant endocanalaire (1), solidarisé d'une tête d'entraînement motrice (10) mue par tous moyens connus, caractérisé en ce que l'instrument endocanalaire(1) est constitué par une base(2) susceptible d'être entraînée en mouvement, par une tête d'entraînement (10) autour d'un axe de référence(A), base(2) à partir de laquelle s'étend librement une partie travaillante (3) filiforme, élastiquement déformable et souple, dont l'axe est décalé parallèlement par rapport à l'axe principal de référence (A) , mais centré autour de celui-ci pour engendrer un volume de révolution quelconque théorique(VI), avantageusement cylindrique, lorsqu'il tourne sans contrainte, et pour s'auto adapter à une cavité de volume quelconque (V2) à travailler lorsqu'il est contraint par cette dernière, de section plus étroite que le volume de révolution théorique (V1) de l'instrument (1), et que par ailleurs l'extrémité libre de ladite partie travaillante souple est maintenue spatialement sur un zone d'appui (P) , qui peut être la zone de gainage apical, situé au fond de la cavité à travailler, de manière à obtenir un instrument multifonctions susceptible d'effectuer tout à la fois, à savoir : le cathétérisme, l'alésage apical et coronaire, ainsi que l'aspiration chirurgicale des résidus du ponçage et leur éjection vers la sortie canalaire par simple déplacement angulaire de l'axe de rotation de la base de l'instrument, dans un sens ou dans un autre, grâce aux qualités mécaniques, par rapport à la zone d'appui P.

Selon un premier exemple d'application, l'instrument endocanalaire 1 est constitué par une base 2 dont l'axe correspond à l'axe de rotation de la tête d'entraînement 10, qui est également l'axe de référence A, l'axe B de la partie travaillante 3 étant décalé parallèlement par rapport audit axe de référence A, et conséquemment par rapport à l'axe de la base 2.

Selon un second exemple d'application, l'instrument endocanalaire 1 est constitué par une base (2) dont l'axe est concentrique à l' axe B de la partie travaillante 3, l'axe de rotation de la tête d'entraînement 10, correspondant à l'axe de référence A, étant décalé parallèlement par rapport audit axe B de la base 2 et de la partie travaillante 3 qui lui est concentrique.

Selon une autre caractéristique de l'innovation la partie travaillante peut avantageusement voir son décentrement augmenté ou diminué soit par rapport à la base, soit par rapport à l'axe de la tête motrice.

Selon une autre caractéristique de l'innovation, la partie travaillante peut présenter des zones lisses diminuant les oppositions de zones ou points de blocages, diminuant le risque de fractures.

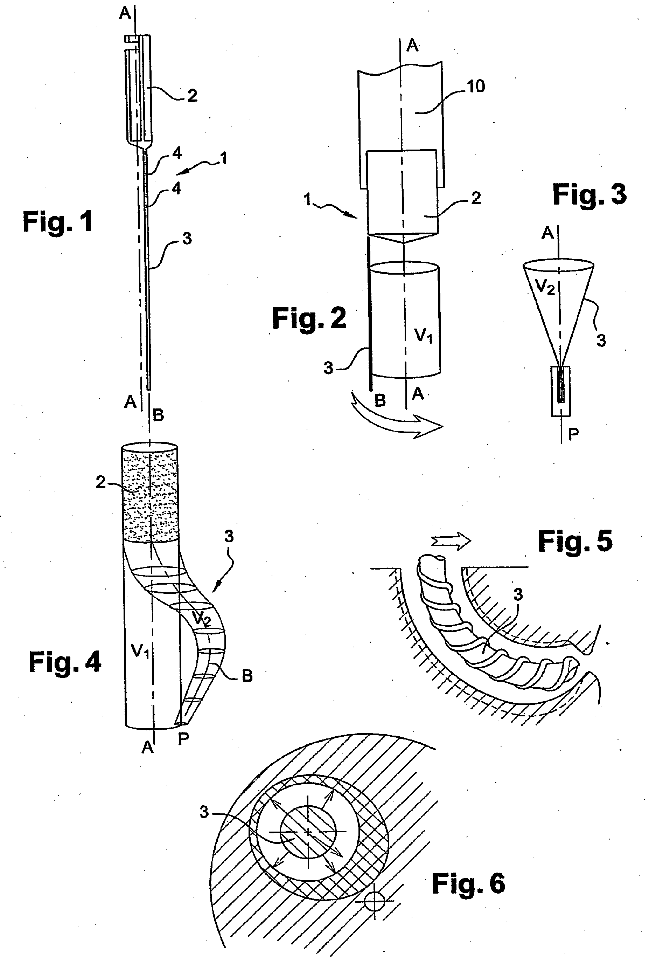

Selon une autre caractéristique de l'invention visible sur la figure 1, l'instrument 1 porte une succession de repères 4, colorés ou non, permettant de déterminer, dans un premier temps; la longueur de travail, puis dans un deuxième temps, de la respecter pendant le travail, celui-ci étant effectué seulement selon un mouvement de révolution essentiellement.

Selon une autre caractéristique de l'invention, la partie travaillante 3 de l'instrument 1 présente un point de faiblesse, réalisant une zone préférentielle de fracture à distance des zones intracanalaires, autorisant en cas de rupture une préhension aisée de la partie désolidarisée de la tête d'entraînement 10 ou du fût de l'instrumentation canalaire.

Selon une autre caractéristique de l'invention, la partie travaillante 3 de l'instrument 1 porte un ciment ou un produit liquide pâteux, permettant une enduction de toute ou partie de la surface du canal à des fins d'enduction de ses parois et /ou d'obturation de celui-ci.

Avec un tel instrument 1 selon l'invention, le long de la zone de plus grand diamètre, la vitesse linéaire instantanée de rotation est la plus grande : en effet, un instrument cylindrique ou cylindro-conique de ponçage, mis en mouvement, délivre une vitesse constante à tous les points de la surface de l'instrument travaillant.

Dans un canal droit, le volume de révolution cylindrique virtuel, dont la surface extérieure est réalisée par la trajectoire de l'instrument, est contraint à un volume côniforme. L'élasticité permet aisément de figurer cette efficacité, ce qui permet d'obtenir un élargissement canalaire important au niveau de l'entrée en quelques secondes.

Comme le montre la figure 5, dans un canal courbe, la partie supérieure du canal à son extrémité serait, du fait de la rigidité instrumentale, peu ou pas instrumentée.

Mais, que cela soit dans la partie coronaire mais aussi dans les parties apicales, l'instrument aura toute son efficacité, car l'instrument de cathétérisme est très proche des parois canalaires.

Ceci fait que l'efficacité instrumentale sera tangentielle. Comme l'instrument est conçu dans ce but, un maximum d'efficacité est donc possible sur toutes les parois. Par ailleurs, la finesse instrumentale fait qu'il est peu probable que la rigidité « l'emporte » sur le gainage. Ainsi se trouve aussi introduit le problème du déplacement canalaire qui peut être nuisible ou utile et même permettre de ressentir la fin du traitement.

Du fait de l'efficacité importante de l'instrument, il est probable qu'une utilisation inappropriée pourrait déplacer le canal voire l'apex.

Les figures 5 et 6 expliquent la réalité géométrique et physique du déplacement canalaire : sur la figure 6, l'axe de rotation figuré par un cercle qui entoure l'axe de rotation montre l'instrument hachuré oblique vers le bas et à droite, la dentine hachurée oblique en bas et à gauche ; la figure 5 montre les rapports de proportionnalité entre l'instrument et le diamètre canalaire, et les parties du canal préférentiellement « usinées ».

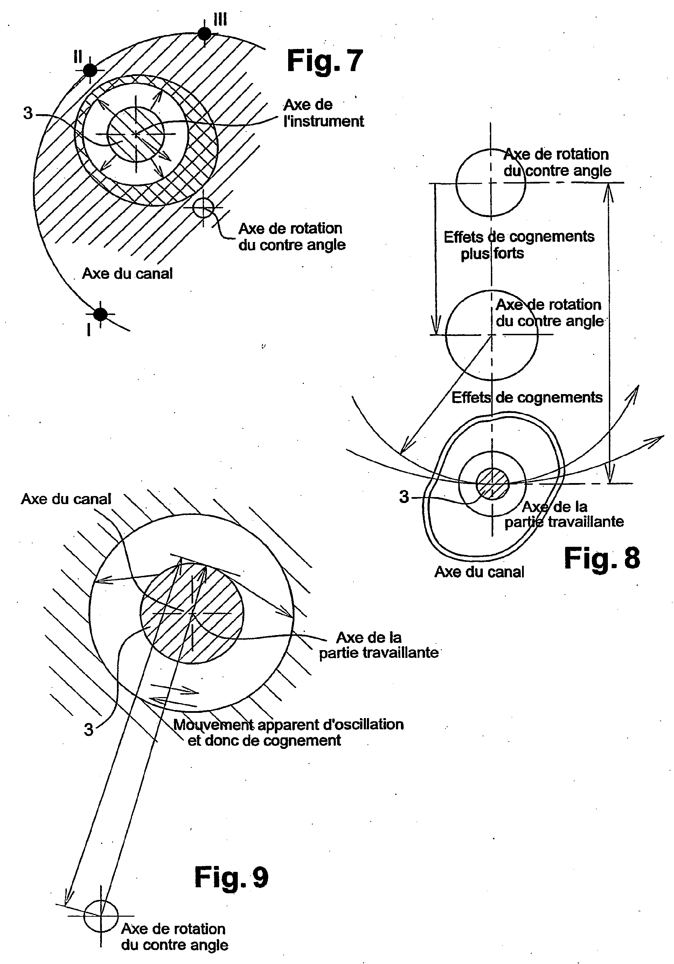

Comme le montre bien la figure 7, le déplacement canalaire est contrôlé. On trouve, selon le repère I, le maximum de tension instrumentale 17 de l'élasticité du matériau, et donc le maximum d'efficacité tangentielle, et donc d'efficacité du fraisage ; en repère II, l'efficacité minimale ; en repère III, l'efficacité moyenne. Mais c'est la main du praticien et son sens clinique qui retrouvent là leurs lettres de noblesse. En effet, l'utilisation de l'élasticité par le contrôle du déplacement de l'axe de rotation du contre-angle permet d'augmenter l'efficacité sur les parois, comme le montre la figure 7 précitée, ces travaux particuliers se faisant en toute sécurité puisque la lumière canalaire est en permanence maintenue : donc pas de bouchons dentinaires à prévoir, ni de perte de direction canalaire, ni de butées et ni de marches d'escalier. Là également, l'un des intérêts du dispositif selon l'invention est le maintien permanent de la perméabilité canalaire.

La main du praticien pouvant à loisir déplacer l'axe du contre angle. Il s'agit des limites de résistance des matériaux, et des limites de consort. En effet l'une des objections importante est cet effet de balancier qui provoque des à coups et des cognements. Ceux-ci semblent être importants dans certaines conditions qui ont pu être identifiées. Ces effets ont été explicités et des réponses ont été données, en se basant sur le fait que les à coups et cognements sont le résultat de la multiplicité de contraintes, qui varient en intensité et en direction. La résultante de ces contraintes s'exprimant elle aussi suivant des axes variables dans l'espace et dans le temps, tout comme son point d'appui.

Il a été choisi de privilégier la contrainte tangentielle qui coupe la dentine, en privilégiant cet contrainte, il a été choisi d'augmenter l'effet tranchant. Plus cette efficacité sera importante plus la coupe sera rapide et nette, moins il y a d'effets gênants. Il a été choisi ainsi d'optimiser les conditions du confort par le choix d'une rigidité appropriée, d'un décentrement contrôlé et peu important, par un instrument peu ou pas oblique et par un contrôle de la vitesse de rotation. Par ailleurs un axe oblique nuit à la précision de la longueur de travail.

Le signe de vacuité instrumentale ressenti pendant le travail pourrait être cliniquement notre signe d'arrêt de mouvement. Ceci oriente le dispositif encore plus vers le sens clinique et tactile du praticien.

## Revendications

1. Dispositif de préparation et d'obturation de la totalité de la cavité endodontique d'une dent comprenant au moins un instrument travaillant endocanalaire (1), solidarisé d'une tête d'entraînement motrice (10) mue par tous moyens connus, **caractérisé en ce que** l'instrument endocanalaire (1) est constitué par une base(2) susceptible d'être entraînée en mouvement, par une tête d'entraînement (10) autour d'un axe de référence(A), base(2) à partir de laquelle s'étend librement une partie travaillante (3) filiforme, élastiquement déformable et souple, dont l'axe est décalé parallèlement par rapport à l'axe principal de référence(A), mais centré autour de celui-ci pour engendrer un volume de révolution quelconque théorique (VI), avantageusement cylindrique, lorsqu'il tourne sans contrainte, et pour s'auto adapter à une cavité de volume quelconque (V2) à travailler lorsqu'il est contraint par cette dernière, dé section plus étroite que le volume de révolution théorique (V1) de l'instrument (1), et que par ailleurs l'extrémité libre de ladite partie travaillante souple est maintenue spatialement sur un zone d'appui (P) , qui peut être la zone de gainage apical, situé au fond de la cavité à travailler, de manière à obtenir un instrument multifonctions susceptible d'effectuer tout à la fois, à savoir : le cathétérisme, l'alésage apical et coronaire, ainsi que l'aspiration chirurgicale des résidus du ponçage et leur éjection vers la sortie canalaire par simple déplacement angulaire de l'axe de rotation de la base de l'instrument, dans un sens ou dans un autre, grâce aux qualités mécaniques, par rapport à la zone d'appui P.

2. Dispositif selon la revendication 1, **caractérisé en ce que** l'instrument endocanalaire (1) est constitué par une base (2) dont l'axe correspond à l'axe de rotation de la tête d'entraînement (10), qui est également l'axe de référence (A), l'axe (B) de la partie travaillante (3) étant décalé parallèlement par rapport au dit axe de référence (A), et conséquemment par rapport à l'axe de la base (2).

3. Dispositif selon la revendication 1, **caractérisé en ce que** l'instrument endocanalaire est constitué par une base (2) dont l'axe est concentrique à l'axe (B) de la partie travaillante (3), l'axe de rotation de la tête d'entraînement (10), correspondant à l'axe de référence (A), étant décalé parallèlement par rapport au dit axe (B) de la base (2) et de la partie travaillante (3) qui lui est concentrique.

4. Dispositif selon les revendications 1 à 3, **caractérisé en ce que** la partie travaillante peut avantageusement voir son décentrement augmenté ou diminué soit par rapport à la base (2), soit par rapport à l'axe de la tête motrice, ou par rapport aux deux.

5. Dispositif selon les revendications 1 à 3, **caractérisé en ce que** la partie travaillante peut présenter des zones lisses diminuant les oppositions de zones ou points de blocages, diminuant le risque de fractures.

6. Dispositif selon les revendications 1 à 5, **caractérisé en ce que** l'instrument (1) porte une succession de repères (4) , colorés ou non, permettant de déterminer dans un premier temps la longueur de travail, puis dans un deuxième temps, de la respecter pendant le travail,celui-ci étant effectué seulement selon un mouvement de révolution essentiellement.

7. Dispositif selon l'une des revendications là 6 **caractérisé en ce que** la partie travaillante (3) de l'instrument (1) présente un point de faiblesse réalisant une zone préférentielle de fracture à distance des zones intracanalaires, autorisant en cas de rupture une préhension aisée de la partie désolidarisée de la tête d'entraînement (10) ou du fût de l'instrumentation canalaire.

8. Dispositif selon l'une des revendications là 7 **caractérisé en ce que** la partie travaillante (3) de l'instrument (1) porte un ciment ou un produit liquide ou pâteux permettant une enduction de toute ou partie de la surface du canal à des fins d'enduction de ses parois et/ou d'obturation de celui-ci.

## Claims

1. Device for preparing and filling the entirety of an endodontic cavity of a tooth, comprising at least one root canal instrument (1) connected to a drive head (10) driven by any known means, **characterised in that** the root canal instrument (1) consists of a base (2) which is able to be driven by a drive head (10) about a reference axis (A), from which base (2) a filiform, elastically deformable and flexible working part (3) extends freely, the axis of which is offset in parallel to the main reference axis (A), but centred around the latter to generate any theoretical (VI) volume of revolution, preferably cylindrical, when it turns without restriction, and to self-adjust to a cavity of any volume (V2) to work when it is constrained by the latter, having a narrower cross section than the theoretical volume of revolution (V1) of the instrument (1), and **in that** furthermore the free end of said flexible working part is held spatially on a bearing zone (P), which can be the apical buffer zone situated at the bottom of the cavity to be worked on, in order to obtain a multifunctional instrument capable of performing all tasks at once, namely: catheterisation, apical and coronary boring, as well as the surgical aspiration of sanding residues and the ejection of the latter towards the canal outlet by means of the simple angular displacement of the axis of rotation of the base of the instrument in one direction or the other in relation to the bearing zone P, by means of the mechanical properties.

2. Device according to claim 1, **characterised in that** the root canal instrument (1) comprises a base (2) the axis of which corresponds to the axis of rotation of the drive head (10), which is also reference axis (A), axis (B) of the working part (3) being offset in parallel in relation to said reference axis (A) and consequently in relation to the axis of the base (2).

3. Device according to claim 1, **characterised in that** the root canal instrument comprises a base (2), the axis of which is concentric to the axis (B) of the working part (3), the axis of rotation of the drive head (10) corresponding to the reference axis (A), which is offset in parallel in relation to the said axis (B) of the base (2) and the working part (3) which is concentric thereto.

4. Device according to claims 1 to 3, **characterised in that** the working part may advantageously be offset to a greater or lesser degree either in relation to the base (2), or in relation to the axis of the drive head or in relation to both.

5. Device according to claims 1 to 3, **characterised in that** the working part may have smooth zones which reduce the opposition of obstructing zones or points, thereby reducing the risk of breaking.

6. Device according to claims 1 to 5, **characterised in that** the instrument (1) bears a succession of markings (4), coloured or not-coloured, making it possible to determine the working length in a first period, then in a second period, and to adhere thereto during operation, this being achieved only according to an essential rotational movement.

7. Device according to one of claims 1 to 6, **characterised in that** the working part (3) of the instrument (1) has a weakened point forming a preferential breaking zone at a distance from the root canal zones, which allows in case of fracture the simple grasping of the part detached from the drive head (10) or the shaft of the canal instrument.

8. Device according to one of claims 1 to 7, **characterised in that** the working part (3) of the instrument (1) bears a cement or a liquid or paste-like product allowing the coating of all or part of the surface of the canal to the coating ends its walls and/or the sealing of the latter.

## Patentansprüche

1. Vorrichtung zum Präparieren und zum Verschließen der Gesamtheit des Wurzelhohlraumes eines Zahnes mit wenigstens einem Wurzelkanalarbeitsinstrument (1), das mit einem motorischen Antriebskopf (10) verbunden ist, der mit beliebigen bekannten Antriebsmitteln betreibbar ist, **dadurch gekennzeichnet, dass** das Wurzelkanalinstrument (1) durch ein Grundteil (2) gebildet ist, das dazu eingerichtet ist, bei Bewegung durch einen Antriebskopf (10) um eine Referenzachse (A) angetrieben zu sein, wobei sich von dem Grundteil (2) frei ein fadenförmiger Arbeitsabschnitt (3) erstreckt, der elastisch verformbar und geschmeidig ist, dessen Achse parallel in Bezug auf die Hauptreferenzachse (A) versetzt, aber um diese zentriert ist, um ein beliebiges theoretisches, vorteilhafterweise zylindrisches, Drehvolumen (V1) zu erzeugen, während es sich zwanglos dreht, und um sich selbständig an ein beliebiges zu bearbeitendes Hohlraumvolumen (V2) anzupassen, während es durch dieses zwangsweise beeinflusst ist, und zwar mit einem kleineren Querschnitt als das theoretische Drehvolumen (V1) des Instruments (1), und dass weiterhin das freie Ende des geschmeidigen Arbeitsabschnittes räumlich durch einen Anlagebereich (P) gehalten ist, der die apikale Wand sein kann, der im Bodenbereich des zu bearbeitenden Hohlraumes angeordnet ist, um ein Multifunktionalinstrument zu erhalten, das dazu eingerichtet ist, alles auf einmal durchzuführen, nämlich das Katheterlegen, das Bohrern im Bereich der Spitze und im Koronarbereich, ebenso wie das chirurgische Ansaugen der Bruchstücke beim Abtragen und deren Auswurf in Richtung des Wurzelausgangs durch einfaches winkelmäßiges Versetzen der Drehachse des Grundteils des Instruments in der einen oder der anderen Richtung aufgrund der mechanischen Eigenschaften in Bezug auf den Anlagebereich P.

2. Vorrichtung nach Anspruch 1, **dadurch gekennzeichnet, dass** das Wurzelkanalinstrument (1) durch ein Grundteil (2) gebildet ist, dessen Achse der Drehachse des Antriebskopfes (10) entspricht, die ebenfalls die Referenzachse (A) ist, wobei die Achse (B) des Arbeitsabschnittes (3) parallel in Bezug auf die Referenzachse (A) und dementsprechend in Bezug auf die Achse des Grundteiles (2) versetzt ist.

3. Vorrichtung nach Anspruch 1, **dadurch gekennzeichnet, dass** das Wurzelkanalinstrument durch ein Grundteil (2) gebildet ist, dessen Achse konzentrisch mit der Achse (B) des Arbeitsabschnittes (3) ist, wobei die Drehachse des Antriebskopfes (10), die der Referenzachse (A) entspricht, parallel in Bezug auf die Achse (B) des Grundteils (2) und den Arbeitsabschnitt (3), der zu diesem konzentrisch ist, versetzt ist.

4. Vorrichtung nach einem der Ansprüche 1 bis 3, **dadurch gekennzeichnet, dass** der Arbeitsabschnitt vorteilhafterweise eine zunehmende oder abnehmende Dezentrierung entweder in Bezug auf das Grundteil (2), in Bezug auf die Achse des Motorkopfes oder in Bezug auf beide erfahren kann.

5. Vorrichtung nach einem der Ansprüche 1 bis 3, **dadurch gekennzeichnet, dass** der Arbeitsabschnitt glatte Bereiche aufweisen kann, die das Gegenüberliegen von zum Blockieren neigenden Bereichen oder Punkten verringern und damit das Risiko von Brüchen herabsetzen.

6. Vorrichtung nach einem der Ansprüche 1 bis 5, **dadurch gekennzeichnet, dass** das Instrument (1) eine Abfolge von farbigen oder nicht farbigen Markern (4) trägt, die während eines ersten Zeitraumes die Arbeitslänge zu bestimmen gestattet und anschließend während eines zweiten Zeitraumes deren Berücksichtigung während der Arbeit gestattet, die lediglich bei einer Drehbewegung merklich beeinflusst wird.

7. Vorrichtung nach einem der Ansprüche 1 bis 6, **dadurch gekennzeichnet, dass** der Arbeitsabschnitt (3) des Instrumentes (1) einen Schwächungspunkt aufweist, der durch eine bevorzugte Bruchzone im Abstand von den innenseitigen Wurzelkanalbereichen ausgeführt ist, was im Falle eines Bruches ein einfaches Greifen des abgetrennten Teiles des Antriebskopfes (10) oder des Schaftes des Wurzelkanalinstrumentes gestattet.

8. Vorrichtung nach einem der Ansprüche 1 bis 7, **dadurch gekennzeichnet, dass** der Arbeitsabschnitt (3) des Instrumentes (1) einen zementartigen Stoff oder ein flüssiges oder pastenartiges Produkt trägt, das ein Spachteln der gesamten Oberfläche oder eines Teiles der Oberfläche des Kanals an Spachtelenden seiner Wände oder dessen Verschließen gestattet.
